# EUROPEAN PATENT SPECIFICATION

(11) **EP 2 066 062 B1**
(45) Date of publication and mention of the grant of the patent: **30.07.2014**
(21) Application number: 08020767.3
(22) Date of filing: 28.11.2008
(51) Int. Cl.: H04L 1/18

(54) **Method and apparatus for setting a highest received state variable in a wireless communication system**
Verfahren und Vorrichtung zum Einstellen der Höchste-Empfangene-Zustandsvariablen in einem drahtlosen Kommunikationssystem
Procédé et appareil de définition d'une variable-d'état-la plus élevée-reçue dans un système de communication sans fil

(30) Priority: 29.11.2007 US 990919 P
(43) Date of publication of application: 03.06.2009
(73) Proprietor: Innovative Sonic Limited, Ebene 72201 (MU)
(72) Inventor: Tseng, Li-Chih, Taipei City Taiwan (TW)
(74) Representative: Weber, Joachim

(56) References cited:
- EP-A1- 1 720 279
- US-A1- 2005 270 996
- NOKIA CORPORATION ET AL: "RLC PDU loss detection" 3GPP DRAFT; R2-073898 RLC PDU LOSS DETECTION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20071001, 1 October 2007 (2007-10-01), XP050136554 [retrieved on 2007-10-01]

## Description

The present invention relates to a method and apparatus for setting a highest received state variable in a wireless communication system according to the pre-characterizing clauses of claims 1 and 6.

The third generation mobile telecommunication system (called 3G system) provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates.

Long Term Evolution wireless communication system (LTE system), an advanced high-speed wireless communication system established upon the 3G mobile telecommunication system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simple.

To keep normal function in the LTE system, related technical specifications have defined operating methods, parameters and variables. For example, aimed at RLC layer, the prior art introduces a Highest received state variable VR(H), which is maintained by the receiving side of each AM (Acknowledged Mode) RLC entity. Generally, AM is suitable for a high-accuracy data service, so that AM RLC layer supports functions of auto-retransmission, reordering, and so on. The reordering function is used to recover an order of protocol data units (PDUs), to make a PDU order processed by a receiver equal to a PDU order outputted from a transmitter. VR(H) is a variable used in the reordering function, and as specified in related technical specifications, it holds a sequence number (SN) following the highest SN of any received AMD PDU (Acknowledged Mode Data Protocol Data Unit); the initial value of VR(H) is 0. Note that, "highest SN" means the last SN in a receiving window. For example, if SN is represented by 7 bits, namely SN = 0~63, then the highest SN within 62, 63 and 0 is 0.

Therefore, if the RLC entity receives a plurality of AMD PDUs, the RLC entity will set VR(H) to be an SN following the highest SN of the received AMD PDUs. Note that, AMD PDU is defined as a complete PDU carrying data in AM. That is to say, the prior art only considers the situation that AMD PDUs are not segmented, such that VR(H) is only updated based on SNs of complete PDUs. However, when radio environment changes, the LTE system can support PDU segmentation or re-segmentation. In such a case, the prior art cannot optimally or accurately update VR(H) when performing the reordering function, causing degradation of system efficiency or malfunction.

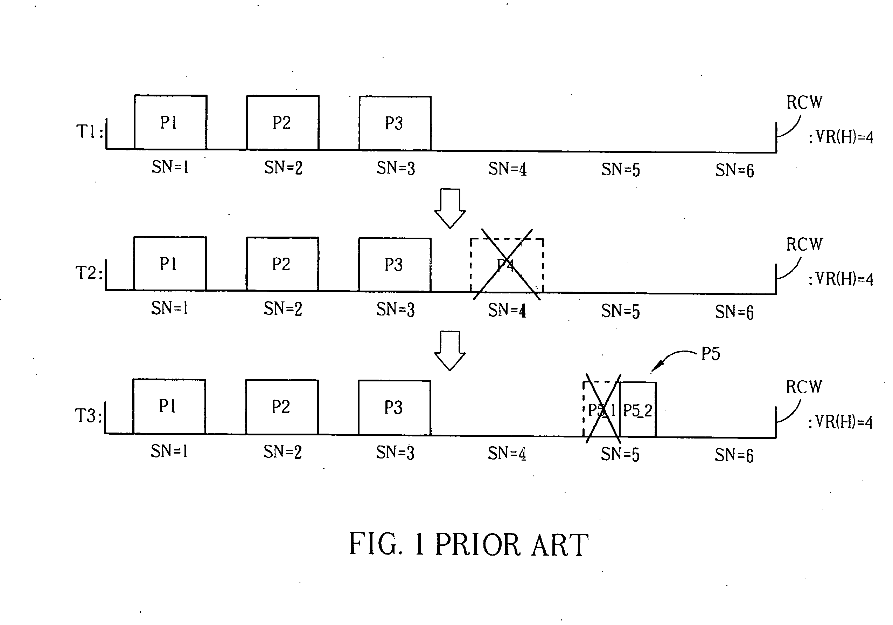

For example, please refer to Fig. 1, which illustrates a schematic diagram of setting VR(H) in the prior art. In Fig. 1, suppose an AM RLC entity has received data PDUs P1, P2, P3 with SN = 1, 2, 3 in a receiving window RCW at a time point T1. According to the prior art, VR(H) is set to be 4. At a time point T2, suppose the next data PDU P4 with SN = 4 is lost during transmission. Since the highest SN of the received data PDUs is 3, VR(H) keeps 4. Next, at a time point T3, suppose the next data PDU P5 with SN = 5 is composed of segments P5_1 and P5_2, and the segment P5_1 is lost during transmission, while the segment P5_2 is successively received. According to the prior art, VR(H) is set to be an SN following the highest SN of the received data PDUs, and that is, keeps 4. In short, the data PDU P5 is not completely received at the time point T3 while the highest SN of the received data PDUs is 3, such that VR(H) keeps 4. Therefore, VR(H) is not accurately updated, which may cause errors in the reordering function, and the received PDUs cannot be arranged as the original order. As a result, delay or other problems may be introduced.

Therefore, the prior art cannot accurately update VR(H), and may cause system malfunction.

R2-073898, "RLC PDU loss detection" discloses a method according to the preamble portion of claim 1.

US 2005/0270996 A1 discloses a method for reordering received data protocol data units in an unacknowledged mode by utilizing a timer and a window.

EP 1 720 279 A1 discloses a data discard mechanism for selective repeat protocol, where the discard mechanism exhibits a sender-initiated discard signaling scheme, which takes into consideration the segmentation and reassembly of upper layer data packets, if such is being employed.

This in mind, the present invention aims at providing a method and apparatus for setting a highest received state variable in a wireless communication system, for timely updating the highest received state variable, to prevent system delay or malfunction, and keep normal operation.

This is achieved by a method and apparatus for setting a highest received state variable in a wireless communication system according to claims 1 and 6. The dependent claims pertain to corresponding further developments and improvements.

As will be seen more clearly from the detailed description following below, the claimed method for setting a highest received state variable in a receiver of a wireless communication system, which comprises receiving a segment of a data protocol data unit having a sequence number greater than or equal to a value of the highest received state variable, and updating the value of the highest received state variable according to the sequence number of the data protocol data unit.

In the following, the invention is further illustrated by way of example, taking reference to the accompanying drawings. Thereof
Fig. 1, which illustrates a schematic diagram of setting VR(H) in the prior art.
Fig. 2 is a schematic diagram of a wireless communications system.
Fig. 3 is a function block diagram of a wireless communications device.
Fig. 4 is a diagram of program code of Fig. 2.
Fig. 5 is a flowchart of a process according to an embodiment of the present invention.

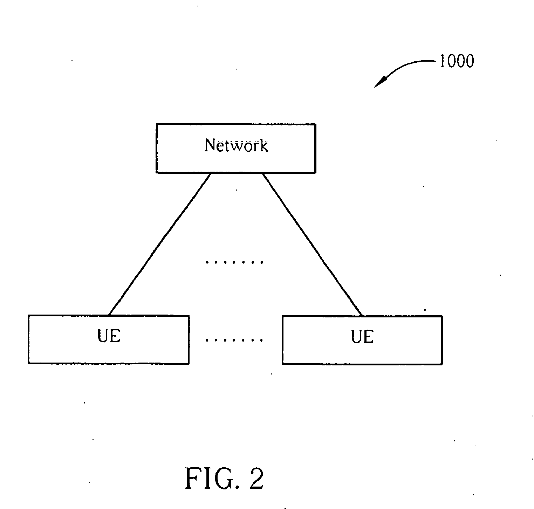

Please refer to Fig. 2, which illustrates a schematic diagram of a wireless communication system 1000. The wireless communication system 1000 can be a 3G mobile telecommunication system, an LTE (long-term evolution) system or other mobile communication systems, and is briefly composed of a network and a plurality of UEs. In Fig. 2, the network and the UEs are simply utilized for illustrating the structure of the wireless communication system 1000. Practically, the network may comprise a plurality of base stations (Node Bs), radio network controllers and so on according to actual demands, and the UEs can be devices such as mobile phones, computer systems, etc. Besides, the network and the UE can be seen as a transmitter or receiver according to transmission direction, e.g., for uplink, the UE is the transmitter and the network is the receiver, and for downlink, the network is the transmitter and the UE is the receiver.

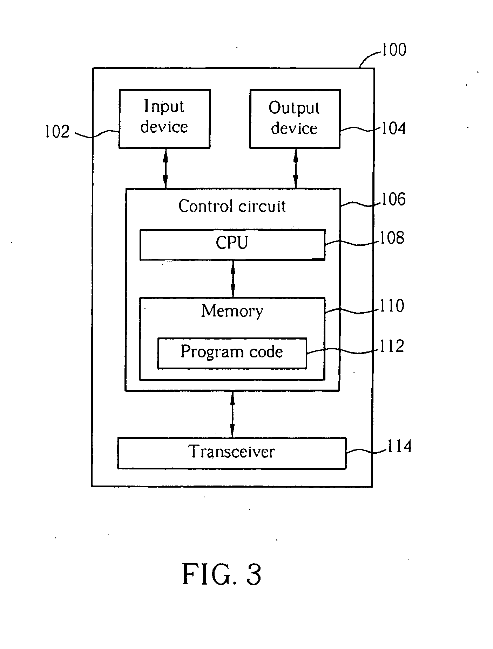

Please refer to Fig. 3, which is a functional block diagram of a communication device 100 in a wireless communication system. The wireless communication system is preferably the LTE system. For the sake of brevity, Fig. 3 only shows an input device 102, an output device 104, a control circuit 106, a central processing unit (CPU) 108, a memory 110, a program code 112, and a transceiver 114 of the communication device 100. In the communication device 100, the control circuit 106 executes the program code 112 in the memory 110 through the CPU 108, thereby controlling an operation of the communication device 100. The communication device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communication protocol framework, the transceiver 114 can be seen as a portion of Layer 1, and the control circuit 106 can be utilized to realize functions of Layer 2 and Layer 3.

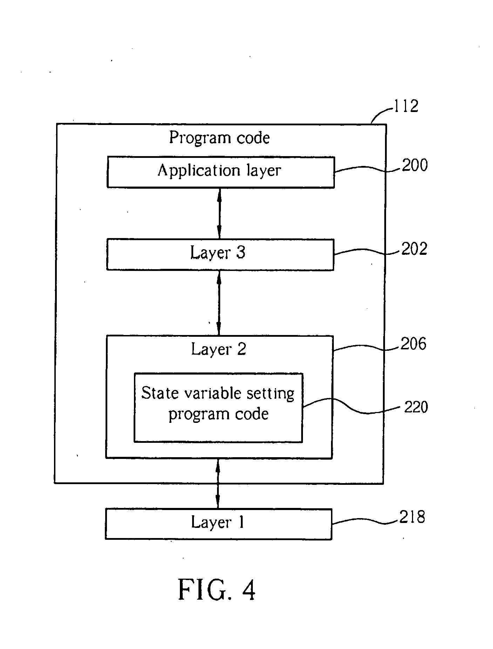

Please continue to refer to Fig. 4. Fig. 4 is a diagram of the program code 112 shown in Fig. 3. The program code 112 includes an application layer 200, a Layer 3 202, and a Layer 2 206, and is coupled to a Layer 1 218. The Layer 3 202 comprises a Radio Resource Control layer and a PDCP (Packet Data Convergence Protocol) layer, and performs resource control. Note that the PDCP layer can alternatively be considered to belong to Layer 2 206. Whether the PDCP layer belongs to the Layer 3 202 or the Layer 2 206 is not related to the present invention. The Layer 2 206 comprises an RLC layer and a MAC layer, and performs link control. The Layer 1 218 performs physical connections.

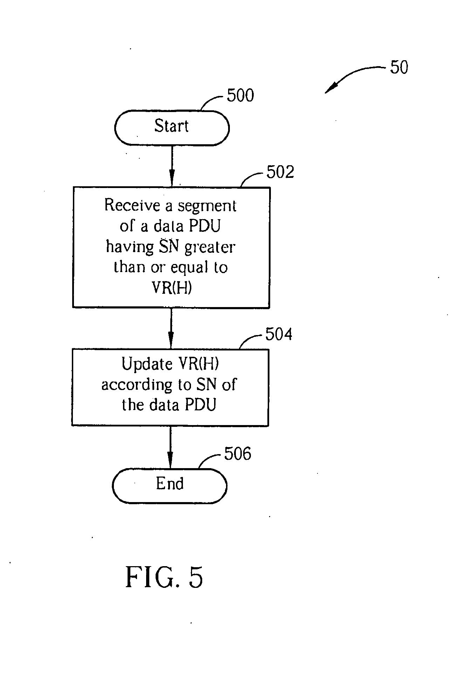

In the LTE system, the Layer 2 206 is composed of a transmitting side and a receiving side, and the receiving side can update or maintain a Highest received state variable VR(H). In such a situation, the embodiment of the present invention provides a state variable setting program code 220 for accurately setting the Highest received state variable VR(H), to prevent system malfunction. Please refer to Fig. 5, which illustrates a schematic diagram of a process 50. The process 50 is utilized for setting VR(H) in a receiver of the wireless communication system 1000, and comprises the following steps:
Step 500: Start.
Step 502: Receive a segment of a data PDU having SN greater than or equal to VR(H).
Step 504: Update VR(H) according to SN of the data PDU.
Step 506: End.

According to the process 50, when a receiver receives a segment of a data PDU with SN greater than or equal to VR(H), the embodiment of the present invention updates VR(H) according to SN of the data PDU. In other words, once a segment of a data PDU is received, the embodiment of the present invention can determine whether to update VR(H) even if the receiver does not receive a complete data PDU. As a result, VR(H) can be timely updated, to prevent system malfunction.

Therefore, when the receiver receives a segment of a data PDU, if SN of the data PDU is greater than or equal to VR(H), the embodiment of the present invention will update VR(H), preferably to be SN of the data PDU or SN of the data PDU plus 1. Take the situation shown in Fig. 1 for example. At the time point T3, since the receiver receives the segment P5_2 of the data PDU P5, and SN (= 5) of the data PDU P5 is greater than VR(H) (= 4), the embodiment of the present invention can set VR(H) to be 5 or 6, so as to prevent system delay or malfunction, to maintain normal operation.

Note that, as those skilled in the art recognized, high/low of SN is determined based upon time sequence. For example, if SN is represented by 7 bits, then the highest SN within 62, 63 and 0 is 0. Therefore, if VR(H) = 63, when a segment of a data PDU with SN = 0 is received, the embodiment of the present invention will update VR(H) to 0 or 1.

In the prior art, VR(H) is an SN following the highest SN of the received data PDUs; that is, the prior art determines whether to update VR(H) only when receiving a complete data PDU. In comparison, the embodiment of the present invention determines whether to update VR(H) when receiving a segment of a data PDU, such that the present invention can timely update VR(H), to prevent system errors.

In summary, when a segment of an AMD PDU with SN greater than or equal to VR(H) is received, the embodiment of the present invention can update VR(H). Therefore, the embodiment of the present invention can timely update VR(H), to prevent system delay or malfunction, and keep normal operation.

## Claims

1. A method for setting a highest received state variable in a receiver of a wireless communication system, wherein the receiver updates or maintains a highest received state variable (502) that has an initial value 0, comprising:
receiving a segment of a data protocol data unit having a sequence number greater than or equal to a value of the highest received state variable (502);
**characterized by**
updating the value of the highest received state variable according to the sequence number of the data protocol data unit (504).

2. The method of claim 1, **characterized in that** updating the value of the highest received state variable according to the sequence number of the data protocol data unit is setting the value of the highest received state variable to be the sequence number of the data protocol data unit.

3. The method of claim 1, **characterized in that** updating the value of the highest received state variable according to the sequence number of the data protocol data unit is setting the value of the highest received state variable to be the sequence number of the data protocol data unit plus 1.

4. The method of claim 1, **characterized in that** the receiver operates in an acknowledged mode.

5. The method of claim 1, **characterized in that** the highest received state variable is utilized in a reordering function of the receiver.

6. A communication device (100) utilized in a receiver of a wireless communication system for accurately setting a highest received state variable (502) that is updated or maintained in the receiver and has an initial value 0, the communication device (100) comprising:
a processor (108) for executing a program code; and
a memory (110) coupled to the processor (108) for storing the program code; wherein the program code comprises:
receiving a segment of a data protocol data unit having a sequence number greater than or equal to a value of the highest received state variable (502);
**characterized by**
updating the value of the highest received state variable according to the sequence number of the data protocol data unit (504).

7. The communication device of claim 6, **characterized in that** in the program code, updating the value of the highest received state variable according to the sequence number of the data protocol data unit is setting the value of the highest received state variable to be the sequence number of the data protocol data unit.

8. The communication device of claim 6, **characterized in that** in the program code, updating the value of the highest received state variable according to the sequence number of the data protocol data unit is setting the value of the highest received state variable to be the sequence number of the data protocol data unit plus 1.

9. The communication device of claim 6, **characterized in that** the communication device operates in an acknowledged mode.

10. The communication device of claim 6, **characterized in that** the highest received state variable is utilized in a reordering function of the receiver.

## Patentansprüche

1. Verfahren zum Einstellen einer Höchste-Empfangene-Zustandsvariablen in einem Empfänger eines drahtlosen Kommunikationssystems, wobei der Empfänger eine Höchste-Empfangene-Zustandsvariable (502) aktualisiert oder beibehält, die einen Anfangswert 0 aufweist, umfassend:
Empfangen eines Segments einer Daten-Protokolldateneinheit, die eine Sequenznummer größer als oder gleichgroß wie ein Wert der Höchste-Empfangene-Zustandsvariablen (502) aufweist;
**gekennzeichnet durch**
Aktualisieren des Werts der Höchste-Empfangene-Zustandsvariablen gemäß der Sequenznummer der Daten-Protokolldateneinheit (504).

2. Verfahren nach Anspruch 1, **dadurch gekennzeichnet, dass** das Aktualisieren des Werts der Höchste-Empfangene-Zustandsvariablen gemäß der Sequenznummer der Daten-Protokolldateneinheit das Einstellen des Werts der Höchste-Empfangene-Zustandsvariablen auf die Sequenznummer der Daten-Protokolldateneinheit ist.

3. Verfahren nach Anspruch 1, **dadurch gekennzeichnet, dass** das Aktualisieren des Werts der Höchste-Empfangene-Zustandsvariablen gemäß der Sequenznummer der Daten-Protokolldateneinheit das Einstellen des Werts der Höchste-Empfangene-Zustandsvariablen auf die Sequenznummer der Daten-Protokolldateneinheit plus 1 ist.

4. Verfahren nach Anspruch 1 **dadurch gekennzeichnet, dass** der Empfänger in einem Bestätigungsmodus, acknowledged mode, betrieben wird.

5. Verfahren nach Anspruch 1, **dadurch gekennzeichnet, dass** die Höchste-Empfangene-Zustandsvariable in einer Neuordnungsfunktion des Empfängers verwendet wird.

6. Kommunikationsvorrichtung (100), die in einem Empfänger eines drahtlosen Kommunikationssystems verwendet wird, zum akkuraten Einstellen einer Höchste-Empfangene-Zustandsvariablen (502), die in dem Empfänger aktualisiert oder beibehalten wird und einen Anfangswert 0 aufweist, wobei die Kommunikationsvorrichtung (100) umfasst:
einen Prozessor (108) zum Ausführen eines Programmcodes; und
einen Speicher (110), der mit dem Prozessor (108) verbunden ist, zum Speichern des Programmcodes; wobei der Programmcode umfasst:
Empfangen eines Segments einer Daten-Protokolldateneinheit, die eine Sequenznummer größer als oder gleichgroß wie ein Wert der Höchste-Empfangene-Zustandsvariablen (502) aufweist;
**gekennzeichnet durch**
Aktualisieren des Werts der Höchste-Empfangene-Zustandsvariablen gemäß der Sequenznummer der Daten-Protokolldateneinheit (504).

7. Kommunikationsvorrichtung nach Anspruch 6, **dadurch gekennzeichnet, dass** im Programmcode das Aktualisieren des Werts der Höchste-Empfangene-Zustandsvariablen gemäß der Sequenznummer der Daten-Protokolldateneinheit das Einstellen des Werts der Höchste-Empfangene-Zustandsvariablen auf die Sequenznummer der Daten-Protokolldateneinheit ist.

8. Kommunikationsvorrichtung nach Anspruch 6, **dadurch gekennzeichnet, dass** im Programmcode das Aktualisieren des Werts der Höchste-Empfangene-Zustandsvariablen gemäß der Sequenznummer der Daten-Protokolldateneinheit das Einstellen des Werts der Höchste-Empfangene-Zustandsvariablen auf die Sequenznummer der Daten-Protokolldateneinheit plus 1 ist.

9. Kommunikationsvorrichtung nach Anspruch 6, **dadurch gekennzeichnet, dass** die Kommunikationsvorrichtung in einem Bestätigungsmodus, acknowledged mode, arbeitet.

10. Kommunikationsvorrichtung nach Anspruch 6, **dadurch gekennzeichnet, dass** die Höchste-Empfangene-Zustandsvariable in einer Neuordnungsfunktion des Empfängers verwendet wird.

## Revendications

1. Procédé pour le réglage d'une variable-d'état-la plus élevée-reçue dans un récepteur d'un système de communication sans fil, dans lequel le récepteur met à jour ou maintient une variable-d'état-la plus élevée-reçue (502) qui a une valeur initiale 0, comprenant le fait de :
recevoir un segment d'une unité de données de protocole de données ayant un numéro de séquence supérieur ou égal à une valeur de la variable-d'état-la plus élevée-reçue (502) ;
**caractérisé par**
la mise à jour de la valeur de la variable-d'état-la plus élevée-reçue selon le numéro de séquence de l'unité de données de protocole de données (504).

2. Procédé de la revendication 1, **caractérisé en ce que** la mise à jour de la valeur de la variable-d'état-la plus élevée-reçue selon le numéro de séquence de l'unité de données de protocole de données est le réglage de la valeur de la variable-d'état-la plus élevée-reçue pour être égale au numéro de séquence de l'unité de données de protocole de données.

3. Procédé de la revendication 1, **caractérisé en ce que** la mise à jour de la valeur de la variable-d'état-la plus élevée-reçue selon le numéro de séquence de l'unité de données de protocole de données est le réglage de la valeur de la variable-d'état-la plus élevée-reçue pour être égale au numéro de séquence de l'unité de données de protocole de données plus 1.

4. Procédé de la revendication 1, **caractérisé en ce que** le récepteur fonctionne en mode d'accusé de réception.

5. Procédé de la revendication 1, **caractérisé en ce que** la variable-d'état-la plus élevée-reçue est utilisée dans une fonction de réordonnancement du récepteur.

6. Dispositif de communication (100) utilisé dans un récepteur d'un système de communication sans fil pour régler de manière précise la variable-d'état-la plus élevée-reçue (502) qui est mise à jour ou maintenue dans le récepteur et a une valeur initiale 0, le dispositif de communication (100) comprenant :
un processeur (108) pour exécuter un code de programme ; et
une mémoire (110) couplée au processeur (108) pour stocker le code de programme ; où le code de programme comprend le fait de :
recevoir un segment d'une unité de données de protocole de données ayant un numéro de séquence supérieur ou égal à une valeur de la variable-d'état-la plus élevée-reçue (502) ;
**caractérisé par**
la mise à jour de la valeur de la variable-d'état-la plus élevée-reçue selon le numéro de séquence de l'unité de données de protocole de données (504).

7. Dispositif de communication de la revendication 6, **caractérisé en ce que** dans le code de programme, la mise à jour de la valeur de la variable-d'état-la plus élevée-reçue selon le numéro de séquence de l'unité de données de protocole de données est le réglage de la valeur de la variable-d'état-la plus élevée-reçue pour être égale au numéro de séquence de l'unité de données de protocole de données.

8. Dispositif de communication de la revendication 6, **caractérisé en ce que** dans le code de programme, la mise à jour de la valeur de la variable-d'état-la plus élevée-reçue selon le numéro de séquence de l'unité de données de protocole de données est le réglage de la valeur de la variable-d'état-la plus élevée-reçue pour être égale au numéro de séquence de l'unité de données de protocole de données plus 1.

9. Dispositif de communication de la revendication 6, **caractérisé en ce que** le dispositif de communication fonctionne en mode d'accusé de réception.

10. Dispositif de communication de la revendication 6, **caractérisé en ce que** la variable-d'état-la plus élevée-reçue est utilisée dans une fonction de réordonnancement du récepteur.
